(19) Europäisches Patentamt
European Patent Office
Office européen des brevets

(11) **EP 4 726 992 A1**

(12) **EUROPEAN PATENT APPLICATION**

(43) Date of publication:
**15.04.2026 Bulletin 2026/16**

(21) Application number: **25185620.9**

(22) Date of filing: **26.06.2025**

(51) International Patent Classification (IPC):
***H02M 3/335*** (2006.01)     ***H02M 1/00*** (2006.01)
***H02M 3/158*** (2006.01)

(52) Cooperative Patent Classification (CPC):
**H02M 3/33507; H02M 1/0003; H02M 1/0043;**
**H02M 1/0077; H02M 3/1584; H02M 3/33576**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **08.10.2024 TW 113138249**

(71) Applicant: **Lite-On Technology Corporation**
**Neihu, Taipei 114 (TW)**

(72) Inventors:
• **LI, Zhong-Heng**
  **Taipei 114 (TW)**
• **CHIEN, Tzu-Hsiang**
  **Taipei 114 (TW)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(54) **CONTROL SYSTEM, METHOD AND NON-TRANSITORY COMPUTER READABLE STORAGE MEDIUM THEREOF FOR TWO-PHASE CONVERTER MODULE**

(57) An aspect of the present disclosure features a control method for a two-phase converter module. The method comprises sampling a total output voltage of the two-phase converter, a first output current and voltage of a first converter, and a second output current and voltage of a second converter, of the two-phase converter. The method also comprises inputting a first error amount related to the total output to a first controller to obtain a first calculation result. The method also comprises inputting a second error amount related to a total current to a first controller to obtain a second calculation result. The method also comprises comparing values of the first calculation result and the second calculation result, and setting the smaller value as a switching period for the first converter and the second converter after transforming the smaller value to a period.

FIG. 2A

# EP 4 726 992 A1

**Description**

TECHNICAL FIELD

The present disclosure relates in general to techniques of controlling two-phase converter module, and more particularly, to a control system, a method and a non-transitory computer readable storage medium thereof for two-phase converter module.

BACKGROUND

In current market, converters capable of modulating voltage and current are widely used in various charging fields, such as charging for electric vehicle. In general application of single-phase converters, the sampling point of the control circuit can be adjusted to avoid sampling noise while switching, which may cause the entire charging system unstable. However, for modules with multiple phase converters that can be applied to a wider output range, such as two-phase converter module, the phase difference between the phase converters may constantly vary due to different frequencies (or periods), which causes the noise point to also constantly vary. Thus, there are high chances of sampling noise from one of the phase converters while switching. In this case, it may cause failure or malfunctions in the charging device which might not operate normally.

Thus, there is a need for modules with multiple phase converters to avoid sampling noise while keeping current/voltage balance for each phase converter.

SUMMARY

The present disclosure describes techniques for controlling current balance, which can balance currents/voltages for two converters, and avoid sampling noises while balancing currents/voltages, to improve the stability of the entire system.

The first aspect of the present disclosure features a control system for two-phase converter module. The control system is coupled to the two-phase converter module and comprises a control unit configured to sample a total output voltage of the two-phase converter module, a first output voltage and a first output current of a first converter of the two-phase converter module, and a second output voltage and a second output current of a second converter of the two-phase converter module. The control system also comprises a master control loop coupled to the control unit. The master control loop is configured to receive and based on the total output voltage, the first output voltage, the first output current, the second output voltage and the second output current, to obtain a master control output value, and configured to convert the master control output value to a switching period. The control system also comprises a balance control loop coupled to the control unit. The balance control loop is configured to receive and based on the first output voltage, the first output current, the second output voltage and the second output current. When the two-phase converter module is in a parallel mode, the balance control loop outputs a balance control output value based on the first output current and the second output current. When the two-phase converter module is in a series mode, the balance control loop outputs the balance control output value based on the first output voltage and the second output voltage. A first phase shift angle and a second phase shift angle are calculated by the balance control loop based on the balance control output value. The control unit calculates PWMs (Pulse-width modulations) of switches of, the first converter and the second converter of the two-phase converter module based on the switching period, the first phase shift angle or the second phase shift angle.

The second aspect of the present disclosure features a control method for two-phase converter module. The method comprises sampling, by a control unit, a total output voltage of the two-phase converter module, a first output voltage and a first output current of a first converter of the two-phase converter module, and a second output voltage and a second output current of a second converter of the two-phase converter module. The method also comprises receiving and basing on, by a master control loop, the total output voltage, the first output voltage, the first output current, the second output voltage and the second output current, to obtain a master control output value, and convert, by the master control loop, the master control output value to a switching period. The method also comprises receiving and basing on, by a balance control loop, the first output voltage, the first output current, the second output voltage and the second output current. When the two-phase converter module is in a parallel mode, the balance control loop outputs a balance control output value based on the first output current and the second output current. When the two-phase converter module is in a series mode, the balance control loop outputs the balance control output value based on the first output voltage and the second output voltage. The method also comprises calculating a first phase shift angle and a second phase shift angle by the balance control loop based on the balance control output value. The method also comprises calculating, by the control unit, PWMs of switches of, the first converter and the second converter of the two-phase converter module based on the switching period, the first phase shift angle or the second phase shift angle.

The third aspect of the present disclosure features a non-transitory computer readable storage medium storing one or more programs, the one or more programs comprising instructions, which when executed by an electronic device, cause the electronic device to perform: sampling, by a control unit, a total output voltage of the two-phase converter module, a first output voltage and a first output current of a first converter of the two-phase converter module, and a second output voltage and a second output current of a second converter of the two-phase converter module; receiving and basing on, by a master control loop, the total output voltage, the first output voltage, the first output current, the second output voltage and the second output current, to obtain a master control output value, and convert, by the master control loop, the master control output value to a switching period; receiving and basing on, by a balance control loop, the first output voltage, the first output current, the second output voltage and the second output current, wherein, when the two-phase converter module is in a parallel mode, the balance control loop outputs a balance control output value based on the first output current and the second output current, or when the two-phase converter module is in a series mode, the balance control loop outputs the balance control output value based on the first output voltage and the second output voltage, wherein a first phase shift angle and a second phase shift angle are calculated by the balance control loop based on the balance control output value; and calculating, by the control unit, PWMs of switches of, the first converter and the second converter of the two-phase converter module based on the switching period, the first phase shift angle or the second phase shift angle.

The details of one or more disclosed implementations are set forth in the accompanying drawings and the description below. Other features, aspects, and advantages will become apparent from the description, the drawings and the claims.

BRIEF DESCRIPTION OF THE DRAWINGS

FIG. 1 is a circuit diagram illustrating an example two-phase converter module converter, according to some implementations of the present disclosure.

FIG. 2A is a diagram illustrating an example control system for controlling the two-phase converter module of FIG. 1, according to some implementations of the present disclosure.

FIG. 2B is a diagram illustrating phase difference adjustments of PMWs for the switches of the converters, according to some implementations of the present disclosure.

FIGs. 3A and 3B are diagrams illustrating waveforms of the results of controlling the two phase converter module, according to some implementations of the present disclosure.

FIG. 4 is a flowchart of a process for controlling the two-phase converter module of FIG. 1, according to some implementations of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

The terms "comprise," "comprising," "include," "including," "has," "having," etc. used in this specification are open-ended and mean "comprises but not limited." The terms used in this specification generally have their ordinary meanings in the art and in the specific context where each term is used. The use of examples in this specification, including examples of any terms discussed herein, is illustrative only, and in no way limits the scope and meaning of the disclosure or of any exemplified term. Likewise, the present disclosure is not limited to various embodiments given in this specification.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative embodiments but, like the illustrative embodiments, should not be used to limit the present disclosure. The elements included in the illustrations herein may not be drawn to scale.

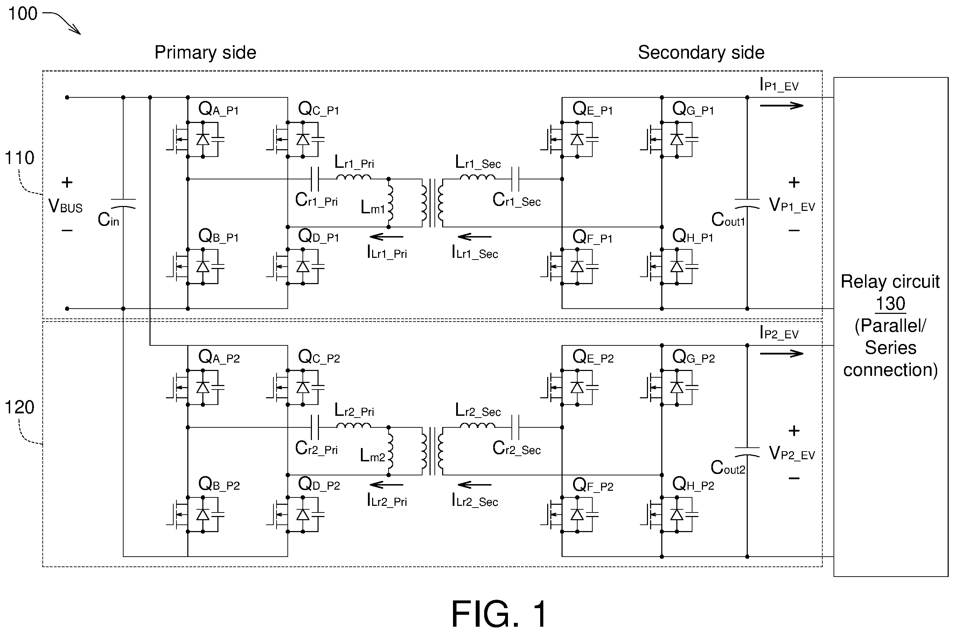

FIG. 1 is a circuit diagram illustrating an example two-phase converter module 100, according to some implementations of the present disclosure. As shown by FIG. 1, the two-phase converter module 100 comprises the first converter 110, the second converter 120 and the relay circuit 130. Wherein, in the two-phase converter module 100, the first converter 110 and the second converter 120 are parallel connected or series connected via the relay circuit 130, such that the two-phase converter module 100 is having a wider output range (Such as greater range of the total output voltage $V_{BAT}$ or the output total current $I_{BAT}$). Specifically, the two-phase converter module 100 is a two-phase capacitor-inductor-inductor-capacitor, CLLC, converter module (or two-phase CLLC converter module), and both of the first converter 110 and the second converter 120 are capacitor-inductor-inductor-capacitor converters (or CLLC converters).

In this embodiment, the two-phase converter module 100 can convert the input voltage $V_{BUS}$ to the first output voltage $V_{P1\_EV}$ and the first output current $I_{P1\_EV}$ by the first converter 110, and convert the input voltage $V_{BUS}$ to the second output voltage $V_{P2\_EV}$ and the second output current $I_{P2\_EV}$ by the second converter 120. Then, the relay circuit 130 can determine that the output of the first converter 110 and the second converter 120 is parallel-connected or series-connected based on the requirement of the total output voltage (such as the total output voltage $V_{BAT}$).

When higher output voltage is needed, the relay circuit 130 can connect in serial the first converter 110 and the second converter 120, such that the two-phase converter module 100 will have higher total output voltage $V_{BAT}$, which the total output current $I_{BAT}$ is equal to the first output current $I_{P1\_EV}$ of the first converter 110. Conversely, when lower output voltage is needed, the relay circuit 130 can connect in parallel the first converter 110 and the second converter 120, such that the two-phase converter module 100 will have lower total output voltage $V_{BAT}$, which the total output current $I_{BAT}$ is equal to the sum of the first output current $I_{P1\_EV}$ of the first converter 110 and the second output current $I_{P2\_EV}$ of the second converter 120 ($I_{BAT}=I_{P1\_EV}+I_{P2\_EV}$).

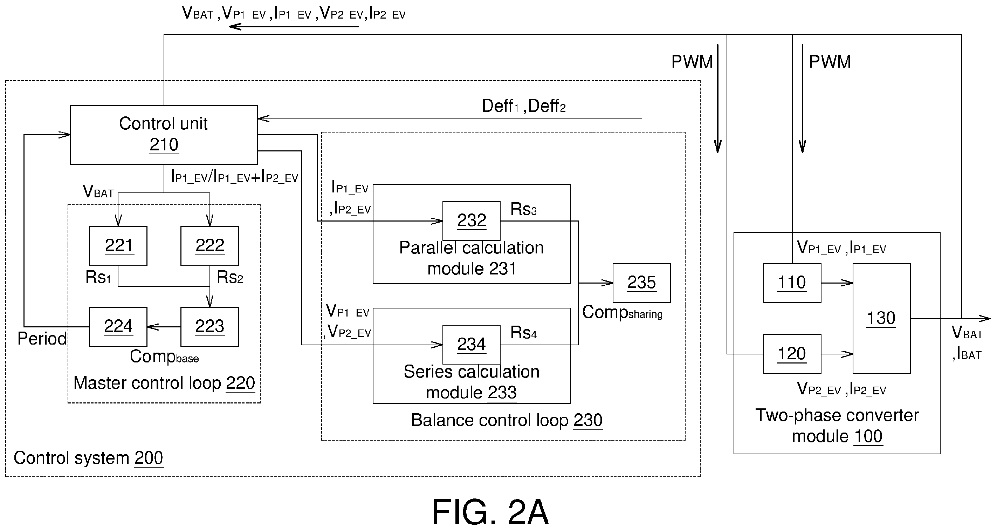

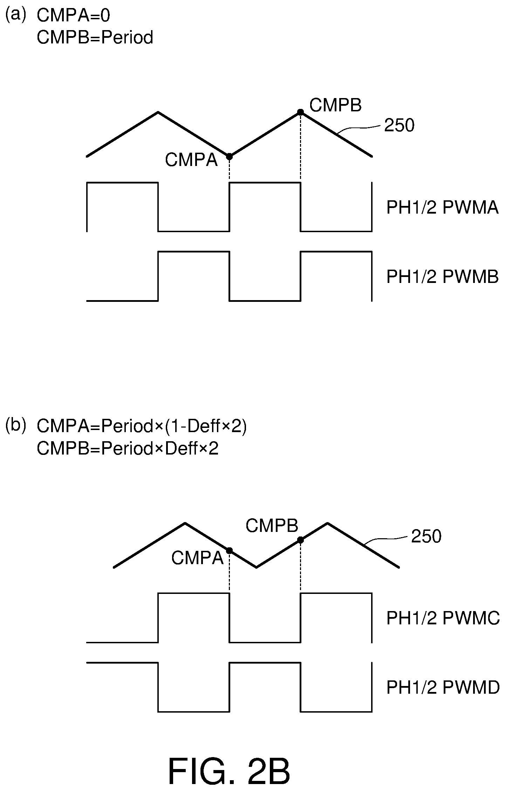

As discussed above, in the practical application, the actual resonant components of the two-phase converter module 100 may have errors, which if the switching frequencies (or periods) of first converter 110 and the second converter 120 are same, output currents of both the first converter 110 and the second converter 120 (first output current $I_{P1\_EV}$ and second output current $I_{P2\_EV}$) may be uneven or unbalanced. This status would cause that one of the converters exceeds designed rated power, such that the whole system would be unstable or failure. The conventional control method is operating different two-phase converters (such as the first converter 110 and the second converter 120) by the different switching frequencies (or periods) to maintain same gains and balance the output currents (such as the first output current $I_{P1\_EV}$ and the second output current $I_{P2\_EV}$). However, when switching frequencies (or periods) of the two phase converters (such as the first converter 110 and the second converter 120) are different, it means that the phase differences between each of PWMs (Pulse-width modulations) of the two phase converters (such as the first converter 110 and the second converter 120) are constantly changed, such as in-phase sometimes or out of phase by 90 degree sometimes (such as between the PMW controlling the switch $Q_{A\_P1}$ and the PWM controlling the switch $Q_{D\_P1}$, of the first converter 110). In this case, oscillation (noise) occurs due to rapidly changing *dv/dt* while switching the switches. Thus, if such unexpected noise is sampled while controlling, the controller would misjudge such that the whole system may become unstable. To solve this issue, the techniques of controlling two phase converter module provided by the present disclosure will be further detailed described referring to FIG. 2A and FIG. 2B as follows.

FIG. 2A is a diagram illustrating an example control system 200 for controlling the two-phase converter module 100 of FIG. 1, according to some implementations of the present disclosure. As shown by FIG. 2A, the control system 200 comprises the control unit 210, the master control loop (or master control ring) 220 and the balance control loop (or balance control ring) 230. The master control loop 220 further comprises the first controller 221, the second controller 222 and the comparator 223 coupled to the first controller 221 and the second controller 222. The balance control loop 230 further comprises the parallel calculation module 231, the series calculation module 233 and the phase shift angle designation module 235 coupled to the parallel calculation module 231 and the series calculation module 233. The parallel calculation module 231 includes the third controller 232, and the series calculation module 233 includes the fourth controller 234, wherein the third controller 232 and the fourth controller 234 are coupled to the control unit 210. In some implementations, the first controller 221, the second controller 222, the third controller 232 and the fourth controller 234 are proportional-integral, PI, controllers.

As shown by FIG. 2A, the control unit 210 can sample the total output voltage $V_{BAT}$, the first output voltage $V_{P1\_EV}$, the first output current $I_{P1\_EV}$, the second output voltage $V_{P2\_EV}$ and the second output current $I_{P2\_EV}$ from the two-phase converter module 100. For example, Since the two-phase converter module 100 can be applied for charging batteries, such as charging batteries of electric vehicles, EV, and , constant current, CC, is needed while the two-phase converter module 100 charging batteries or constant voltage, CV, is needed while the two-phase converter module 100 under no load.

To achieve the foresaid purpose, in this embodiment, the first controller 221 is configured to receive the first error amount $E_1$ related to the total output voltage $V_{BAT}$. In some implementations, the first error amount $E_1$ is the reference voltage $V_{cmd}$ subtracting the total output voltage $V_{BAT}$ (which $E_1=V_{cmd}-V_{BAT}$), wherein the first error amount $E_1$ is an error signal. After inputting the first error amount $E_1$ to the first controller 221, $PI_{OUT}$ can be obtained as the first calculation result, according to the following equation (1), which is discretized PI controller mathematical equation, as following:

$$PI_{OUT} = Error(n) \times K_p + Error(n) \times K_i + Error(n-1) \times K_i \qquad (1)$$

Wherein, $K_p$ is a proportional gain parameter, $K_i$ is an integral gain parameter and *Error* is an error amount (such as the first error amount $E_1$). Wherein, the proportional gain parameter $K_p$ and the integral gain parameter $K_i$ can be set according to required voltage/current of input/output of each controller (such as the first controller 221, the second controller 222, the third controller 232 or the fourth controller 234 of FIG. 2A), which means that proportional gain parameters and the integral gain parameters between each controller may be same, different, or same in some parts.

Similarly, the second controller 222 is configured to receive the second error amount $E_2$ related to the total output current $I_{BAT}$. In some implementations, the second error amount $E_2$ can be the reference current $I_{cmd}$ subtracting the total output current $I_{BAT}$. As discussed above, the total output current $I_{BAT}$ is equal to the first output current $I_{P1\_EV}$ of the first converter 110 when the first converter 110 and the second converter 120 are connected in series. Thus, in this case, the second error amount $E_2$ is the reference current $I_{cmd}$ subtracting the first output current $I_{P1\_EV}$ (which $E_2=I_{cmd}-I_{P1\_EV}$). Conversely, when the total output current $I_{BAT}$ is equal to the sum of the first output current $I_{P1\_EV}$ of the first converter 110 and the second output current $I_{P2\_EV}$ of the second converter 120 when the first converter 110 and the second converter 120 are connected in parallel. Thus, in this case, the second error amount $E_2$ is the reference current $I_{cmd}$ subtracting the sum of the first output current $I_{P1\_EV}$ of the first converter 110 and the second output current $I_{P2\_EV}$ of the second converter 120 (which $E_2=I_{cmd}-(I_{P1\_EV}+I_{P2\_EV})$). Wherein, the second error amount $E_2$ is an error signal.

In some implementations, the control unit 210 determines whether the two-phase converter module 100 operates in the series mode or the parallel mode, according to the total output voltage $V_{BAT}$. After inputting the second error amount $E_2$, the second controller 222 also can obtain $PI_{OUT}$ as the second calculation result $Rs_2$, according to the equation (1) listed above.

In some implementations, the total output voltage $V_{BAT}$, the first output current $I_{P1\_EV}$, or the second output current $I_{P2\_EV}$ can be first filtered by a low pass filter (LPF) to remove high frequency noises, then be input to the first controller 221 or the second controller 222. Secondly, the comparator 223 can receive values of the first calculation result $Rs_1$ and the second calculation result $Rs_2$, and select the smaller value between the first calculation result $Rs_1$ and the second calculation result $Rs_2$ as the main control output value $Comp_{base}$. Wherein, the master control loop 220 determines the switching periods of the first converter 110 and the second converter 120 of the two-phase converter module 100 according to the main control output value $Comp_{base}$, thus switching periods (frequencies) of the first converter 110 and the second converter 120 are same.

In some implementations, the master control loop 220 also comprises the period converter 224 configured to convert the main control output value $Comp_{base}$ to the switching period (Period). The period converter 224 can convert the main control output value $Comp_{base}$ to the switching period (Period) according to the equation (2) as following:

$$Period = Comp_{base} \times SYSCLK/F_{min} \qquad (2)$$

Wherein, SYSCLK is the system clock, and $F_{min}$ is the minimum frequency.

In some implementations, the master control loop 220 can control the switching periods (frequencies) of the first converter 110 and the second converter 120 via the control unit 210. It can be understood that control terminals (such as the gate terminal of each switch) of multiple switches (such as switch $Q_{A\_P1}$ to switch $Q_{H\_P1}$) of the first converter 110 or control terminals (such as the gate terminal of each switch) of multiple switches (such as switch $Q_{A\_P2}$ to switch $Q_{H\_P2}$) of the second converter 120 are controlled to achieve the purpose of setting switching periods (or frequencies) of each converter.

As discussed above, the two-phase converter module can be operated in the parallel mode or series mode according to the required range of the total output voltage $V_{BAT}$. When the total output voltage $V_{BAT}$ is required in low voltage range, which the two-phase converter module is operated in the parallel mode, the first output current $I_{P1\_EV}$ of the first converter 110 and the second output current $I_{P2\_EV}$ of the second converter 120 are needed to be balanced. As results, the parallel calculation module 231 of the balance control loop 230 of the control system 200 is selected. The sampled first output current $I_{P1\_EV}$ and the sampled second output current $I_{P2\_EV}$ also can first be filtered by the LPF to remove high frequency noises, then the third error amount $E_3$ can be obtained by subtracting the first output current $I_{P1\_EV}$ from the second output current $I_{P2\_EV}$ (which $E_3 = I_{P2\_EV}-I_{P1\_EV}$). Following, the third error amount $E_3$ is input to the third controller 232, and the third calculation result $Rs_3$ can be obtained according to the equation (1) listed above.

Conversely, when the total output voltage $V_{BAT}$ is required in high voltage range, which the two-phase converter module is operated in the series mode, the first output voltage $V_{P1\_EV}$ of the first converter 110 and the second output voltage $V_{P2\_EV}$ of the second converter 120 are needed to be balanced. As results, the series calculation module 233 of the balance control loop 230 of the control system 200 is selected. The sampled first output voltage $V_{P1\_EV}$ and the sampled second output voltage $V_{P2\_EV}$ also can first be filtered by the LPF to remove high frequency noises, then the fourth error amount $E_4$ can be obtained by subtracting the first output voltage $V_{P1\_EV}$ from the second output voltage $V_{P2\_EV}$ (which $E_4 = V_{P2\_EV} - V_{P1\_EV}$). Following, the fourth error amount $E_4$ is input to the fourth controller 234, and the fourth calculation result $Rs_4$ can be obtained according to the equation (1) listed above. Based on the parallel mode or series mode of two-phase converter module 100, the third calculation result $Rs_3$ of the parallel calculation module 231 or the fourth calculation result $Rs_4$ of the series calculation module 233 can be selected as the balance control output value $Comp_{sharing}$. For example, when the two-phase converter module 100 operates in the parallel mode, the balance control output value $Comp_{sharing}$ is the third calculation result Rss. Or, when the two-phase converter module 100 operates in the series mode, the balance control output value $Comp_{sharing}$ is the fourth calculation result $Rs_4$. In some implementations, the upper and lower limits of the third calculation result $Rs_3$ or the fourth calculation result $Rs_4$ are respectively controlled within $\pm 0.2$.

Then, the phase shift angle designation module 235 receives the balance control output value $Comp_{sharing}$, which the first phase shift angle $Deff_1$ of the first converter 110 is determined by adding the reference duty cycle, such as 0.5, to the balance control output value $Comp_{sharing}$ (which $Deff_1 = 0.5 + Comp_{sharing}$), and the second phase shift angle $Deff_2$ of the second converter 120 is determined by subtracting the balance control output value $Comp_{sharing}$ from the reference duty cycle, such as 0.5 (which $Deff_2 = 0.5 - Comp_{sharing}$). In some implementations, the upper limit and the lower limit of the first phase shift angle $Deff_1$ and the second phase shift angle $Deff_2$ are respectively 0.5 and 0.3. In this case, according to different operation mode (parallel mode or series mode), the balance control output value $Comp_{sharing}$ would be the third calculation result $Rs_3$ (according to which the third error amount $E_3$ equals to the second output current $I_{P2\_EV}$ subtracting the first output current $I_{P1\_EV}$), or the fourth calculation result $Rs_4$ (according to which the fourth error amount $E_4$ is the second output voltage $V_{P2\_EV}$ subtracting the first output voltage $V_{P1\_EV}$).

Regarding that, when the second output current $I_{P2\_EV}$ is greater than the first output current $I_{P1\_EV}$, or the second output voltage $V_{P2\_EV}$ is greater than the first output voltage $V_{P1\_EV}$, the calculated third error amount $E_3$ or the calculated fourth error amount $E_4$ is positive. Furthermore according to the equation (1) listed above, the balance control output value $Comp_{sharing}$ generated by the third controller 232 or the fourth controller 234 (selected from the third calculation result $Rs_3$ or the fourth calculation result $Rs_4$) is also positive. That is, for calculating the first phase shift angle $Deff_1$ ($Deff_1 = 0.5 + Comp_{sharing}$) and the second phase shift angle $Deff_2$ ($Deff_2 = 0.5 - Comp_{sharing}$), since the first phase shift angle $Deff_1$ and the second phase shift angle $Deff_2$ have upper limit, 0.5, and lower limit, 0.3, only the second phase shift angle $Deff_2$ will be changed($Deff_2 = 0.5 - Comp_{sharing}$), which the first phase shift angle $Deff_1$ will be kept at 0.5 since the first phase shift angle $Deff_1$ will exceed the upper limit, 0.5 after calculation. As a result, PWMs of the switch $O_{A\_P1}$ and the switch $Q_{D\_P1}$ of the first converter 110 are overlapped, which the duty cycle is 0.5. Additionally, the second phase shift angle $Deff_2$ would be less than 0.5, which means that PWMs of the switch $Q_{A\_P2}$ and the switch $Q_{D\_P2}$ of the second converter 120 are with phase shifting (not overlapped), and the duty cycle is less than 0.5.

For example, when the balance control output value $Comp_{sharing}$ generated by the third controller 232 or the fourth controller 234 is 0.2, the calculated first phase shift angle $Deff_1$ is 0.7 ($Deff_1 = 0.5 + 0.2$) and the calculated second phase shift angle $Deff_2$ is 0.3 ($Deff_2 = 0.5 - 0.2$). Since the first phase shift angle $Deff_1$ (0.7) exceeds the upper limit, 0.5, the first phase shift angle $Deff_1$ will be kept at 0.5, which means As an result, PWMs of the switch $O_{A\_P1}$ and the switch $Q_{D\_P1}$ of the first converter 110 are overlapped, and the second phase shift angle $Deff_2$ would be 0.3, which also means that PWMs of the switch $Q_{A\_P2}$ and the switch $Q_{D\_P2}$ of the second converter 120 are with phase shifting (not overlapped). For the change of the second phase shift angle $Deff_2$, the second phase shift angle $Deff_2$ can be decreased by adjusting the switch $Q_{A\_P2}$ and the switch $Q_{D\_P2}$ of the second converter 120, and the switch $O_{A\_P1}$ and the switch $O_{D\_P1}$ of the first converter 110, can be used for keeping the first phase shift angle $Deff_1$ as 0.5. Since the second phase shift angle $Deff_2$ is decreased (such as from 50% to 45%), which means that the energy transferring time is shortened, the second output current $I_{P2\_EV}$ or the second output voltage $V_{P2\_EV}$ of the second converter 120 will be lower, to achieve the effect of balancing the output voltages/currents of the first converter 110 and the second converter 120.

Conversely, when the first output current $I_{P1\_EV}$ is greater the second output current $I_{P2\_EV}$, or the first output voltage $V_{P1\_EV}$ is greater than the second output voltage $V_{P2\_EV}$, the third error amount $E_3$ or the fourth error amount $E_4$ is negative, Further more according to the equation (1) listed above, the balance control output value $Comp_{sharing}$ generated by the third controller 232 or the fourth controller 234 (selected from the third calculation result $Rs_3$ or the fourth calculation result $Rs_4$) is also negative. That is, for calculating the first phase shift angle $Deff_1$ ($Deff_1 = 0.5 + Comp_{sharing}$) and the second phase shift angle $Deff_2$ ($Deff_2 = 0.5 - Comp_{sharing}$), the first phase shift angle $Deff_1$ would be less than 0.5, which means that PWMs of the switch $Q_{A\_P1}$ and the switch $Q_{D\_P1}$ of the first converter 110 are with phase shifting (not overlapped), and the duty cycle is less than 0.5. Since the first phase shift angle $Deff_1$ and the second phase shift angle $Deff_2$ have upper limit, 0.5, and lower limit, 0.3, the second phase shift angle $Deff_2$ will exceed the upper limit, 0.5 after calculation, which the second phase shift angle $Deff_2$ will be kept at 0.5 and also means that PWMs of the switch $Q_{A\_P2}$ and the switch $Q_{D\_P2}$ of the second converter 120 are overlapped, which the duty cycle is 0.5.

For example, when the balance control output value Comp$_{sharing}$ generated by the third controller 232 or the fourth controller 234 is -0.2, the calculated first phase shift angle Deff$_1$ is 0.3 (Deff$_1$=0.5+(-0.2)) and the calculated second phase shift angle Deff$_2$ is 0.7 (Deff$_2$=0.5-(-0.2)). Since the first phase shift angle Deff$_1$ is 0.3, PWMs of the switch Q$_{A\_P1}$ and the switch Q$_{D\_P1}$ of the first converter 110 are with phase shifting (not overlapped). The second phase shift angle Deff$_2$ will be kept at 0.5 since the second phase shift angle Deff$_2$ (0.7) will exceed the upper limit, 0.5, which means that PWMs of the switch Q$_{A\_P2}$ and the switch Q$_{D\_P2}$ of the second converter 120 are overlapped.

For the change of the first phase shift angle Deff$_1$, the first phase shift angle Deff$_1$ can be decreased by adjusting the switch Q$_{A\_P1}$ and the switch Q$_{D\_P1}$ of the first converter 110, while the switch Q$_{A\_P2}$ and the switch Q$_{D\_P2}$ of the second converter 120 can be used to keep the second phase shift angle Deff$_2$ as 0.5 (50%). Since the first phase shift angle Deff$_1$ is decreased (such as from 50% to 45%), which means that the energy transferring time is shortened, the first output current I$_{P1\_EV}$ or the first output voltage V$_{P1\_EV}$ of the first converter 110 will be lower, to achieve the effect of balancing the output voltages/currents of the first converter 110 and the second converter 120.

FIG. 2B is a diagram illustrating phase difference adjustments of PMWs for the switches of the converters (the first converter 110 and the second converter 120 of FIG. 2A), according to some implementations of the present disclosure. The foresaid PWMs for controlling each switch can be generated by the control unit 210 according to the first phase shift angle Deff$_1$ or the first phase shift angle Deff$_2$. Specifically, the control unit 210 can use the triangular wave 250 for comparing the first phase shift angle Deff$_1$ or the first phase shift angle Deff$_2$, to determine the first sampling point CMPA and the second sampling point CMPB, from the triangular wave 250, of PWMs. As shown by diagram (a) of FIG. 2B, when PWMs are not needed to be adjusted (which the duty cycle is 0.5), regarding the PH1/2 PWM A for controlling the switch Q$_{A\_P1}$ of the first converter 110 and the switch Q$_{A\_P2}$ of the second converter 120, the first sampling point CMPA (CMPA=0) is at the valley of the triangular wave 250 (corresponding to rising edge of PH1/2 PWM A), and the second sampling point CMPB (CMPB=Period, such as 0.5) is at the peak of the triangular wave 250 (corresponding to falling edge of PH1/2 PWM A). Regarding the PH1/2 PWM B for controlling the switch Q$_{B\_P1}$ (complementary switch of the switch Q$_{A\_P1}$) of the first converter 110 and the switch Q$_{B\_P2}$ (complementary switch of the switch Q$_{A\_P2}$) of the second converter 120, the first sampling point CMPA (CMPA=0) is at the valley of the triangular wave 250 (corresponding to falling edge of PH1/2 PWM B), and the second sampling point CMPB (CMPB=Period, such as 0.5) is at the peak of the triangular wave 250 (corresponding to rising edge of PH1/2 PWM B).

As shown by diagram (b) of FIG. 2B, when PWMs are needed to be adjusted (which the duty cycle is 0.5) according to phase shift angle Deff (the first phase shift angle Deff$_1$ or the first phase shift angle Deff$_2$), such as Deff=0.3 and Period=0.5, regarding the PH1/2 PWM C for controlling the switch Q$_{C\_P1}$ of the first converter 110 and the switch Q$_{C\_P2}$ of the second converter 120, the first sampling point CMPA (CMPA= (Period = 0.5) $\times$ (1 - (Deff = 0.3) $\times$ 2) = 0.2) is at upper left of the valley of the triangular wave 250, which is 0.2 higher than the valley thereof (corresponding to falling edge of PH1/2 PWM C), and the second sampling point CMPB (CMPB = (Period = 0.5) $\times$ (Deff = 0.3) $\times$ 2 = 0.3) is at lower left of the peak of the triangular wave 250, which is 0.3 lower than the peak thereof (corresponding to rising edge of PH1/2 PWM C). Similarly, regarding the PH1/2 PWM D for controlling the switch Q$_{D\_P1}$ (complementary switch of the switch Q$_{C\_P1}$) of the first converter 110 and the switch Q$_{D\_P2}$ (complementary switch of the switch Q$_{C\_P2}$) of the second converter 120, the first sampling point CMPA (CMPA=0.2) is at upper left of the valley of the triangular wave 250, which is 0.2 higher than the valley thereof (corresponding to rising edge of PH1/2 PWM D), and the second sampling point CMPB (CMPB=0.3) is at lower left of the peak of the triangular wave 250 which is 0.3 lower than the peak thereof (corresponding to falling edge of PH1/2 PWM D).

By the example above, it can be known that sampling points (corresponding to the rising edges or falling edges) of the PH1/2 PWM D for controlling the switch Q$_{D\_P1}$ of the first converter 110 and the switch Q$_{D\_P2}$ of the second converter 120 or the PH1/2 PWM C for controlling the switch Q$_{C\_P1}$ of the first converter 110 and the switch Q$_{C\_P2}$ of the second converter 120 can be adjusted to have phase differences with the PH1/2 PWM A for controlling the switch Q$_{A\_P1}$ of the first converter 110 and the switch Q$_{A\_P2}$ of the second converter 120 or the PH1/2 PWM B for controlling the switch Q$_{B\_P1}$ of the first converter 110 and the switch Q$_{B\_P2}$ of the second converter 120. Thereby, the control unit can generate respective PWMs for operating switches of the first converter 110 and the second converter 120 with phase differences.

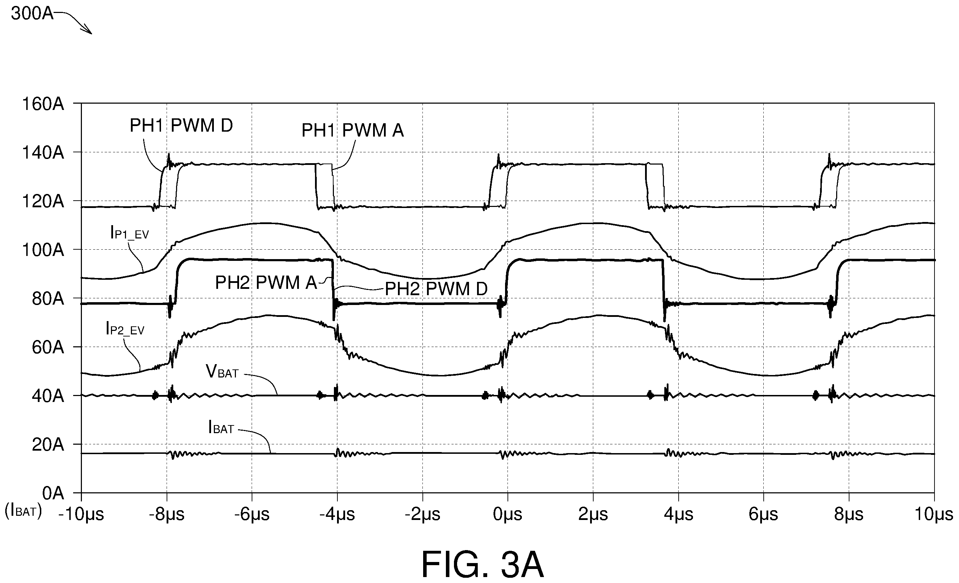

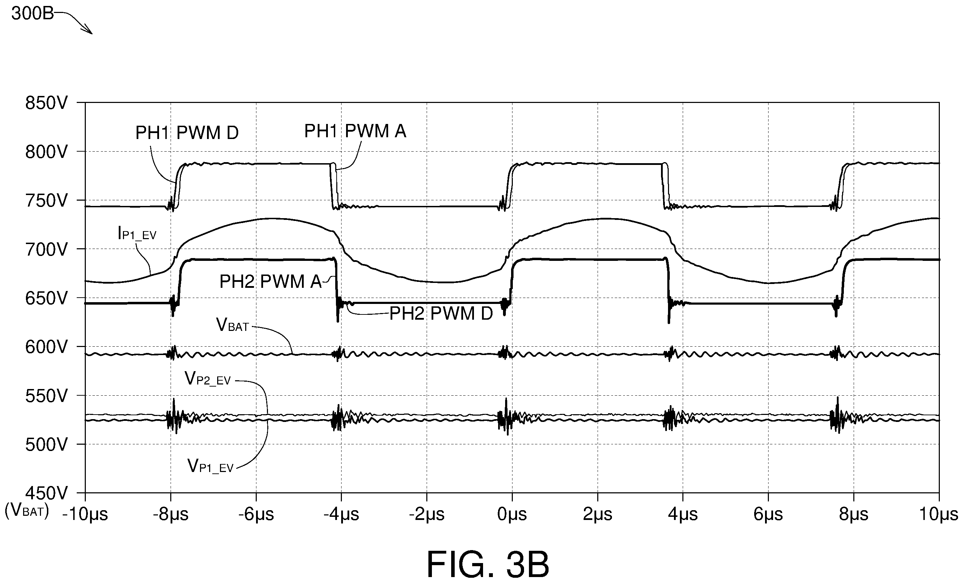

Then, referring to FIG. 3A and FIG. 3B, the balance control based on the example in which the balance control output value Comp$_{sharing}$ is negative as a result, will be described as follows. FIGs. 3A and 3B are diagrams illustrating waveforms 300A and 300B of the results of controlling the two-phase converter module 100, according to multiple implementations of the present disclosure.

As shown by the waveform 300A of FIG. 3A, when two-phase converter module operates in the parallel mode and Comp$_{sharing}$ is negative, the second phase shift angle Deff$_2$ of the second converter 120 is kept at 0.5, which means PWMs (PH 2 PWM A for the switch Q$_{A\_P2}$ and PH 2 PWM D for the switch Q$_{D\_P2}$) for controlling the switch Q$_{A\_P2}$ and the switch Q$_{D\_P2}$ of the second converter 120 are overlapped (the two sets of switches are both on and off at the same time, and the phase shift angle is 0) to keep the duty cycle as 0.5. Meanwhile, the first phase shift angle Deff$_1$ of the first converter 110 is changed to 0.45, which means PWMs (PH 1 PWM A for the switch Q$_{A\_P1}$ and PH 1 PWM D for the switch Q$_{D\_P1}$) for controlling the switch $Q_{A\_P2}$ and the switch $Q_{D\_P2}$ of the second converter 120 have a phase difference (the two sets of switches are not on and off at the same time and with phase shift angle). After the controlling described above, it can be seen in waveform 300A that the waveform of the first output current $I_{P1\_EV}$ of the first converter 110, and the waveform of the second output current $I_{P2\_EV}$ of the second converter 120 are almost uniformed, which the effects of balancing output currents of the first converter 110 and the second converter 120 are achieved.

As shown by the waveform 300B of FIG. 3B, when two-phase converter module operates in the series mode and $Comp_{sharing}$ is negative, the second phase shift angle $Deff_2$ of the second converter 120 is kept at 0.5 (50%), which means PWMs (PH 2 PWM A for the switch $Q_{A\_P2}$ and PH 2 PWM D for the switch $Q_{D\_P2}$) for controlling the switch $Q_{A\_P2}$ and the switch $Q_{D\_P2}$ of the second converter 120 are overlapped (the two sets of switches are both on and off at the same time, and the phase shift angle is 0). Meanwhile, the first phase shift angle $Deff_1$ of the first converter 110 is changed to less than 0.5 (50%), which means PWMs (PH 1 PWM A for the switch $Q_{A\_P1}$ and PH 1 PWM D for the switch $Q_{D\_P1}$) for controlling the switch $Q_{A\_P2}$ and the switch $Q_{D\_P2}$ of the second converter 120 have a phase difference (the two sets of switches are not on and off at the same time and with phase shift angle as shown by FIG. 3B). After the controlling described above, it can be seen in waveform 300B that the waveform of the first output voltage $V_{P1\_EV}$ of the first converter 110, and the waveform of the second output voltage $V_{P2\_EV}$ of the second converter 120 are almost uniformed, which the effects of balancing output voltages of the first converter 110 and the second converter 120 are achieved.

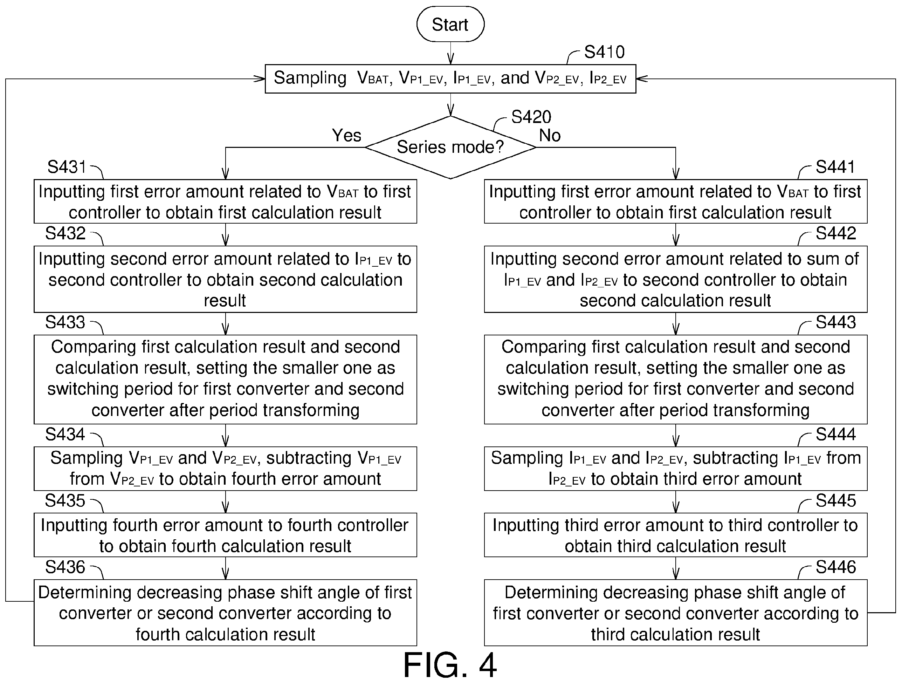

FIG. 4 is a flowchart of a process for controlling the two-phase converter module 100 of FIG. 1, according to some implementations of the present disclosure. In step S410, for example, the control unit 210 of FIG. 2A samples the total output voltage $V_{BAT}$ of the two-phase converter module (such as the two-phase converter module 100 of FIG. 1 or FIG. 2A), the first output voltage $V_{P1\_EV}$ and the first output current $I_{P1\_EV}$ of the first converter (such as the first converter 110 of FIG. 1 or FIG. 2A), and the second output voltage $V_{P2\_EV}$ and the second output current $I_{P2\_EV}$ of the second converter (such as the second converter 120 of FIG. 1 or FIG. 2A). In step S420, determines whether the two-phase converter module is in the series mode, and steps S431 to S436 are executed if so. For example, whether the two-phase converter module operates in the series mode or the parallel mode can be determined according to the total output voltage $V_{BAT}$ by the control unit 210 of FIG. 2A.

In step S431, input the first error amount $E_1$ related to the total output voltage $V_{BAT}$ (such as $E_1=V_{cmd}-V_{BAT}$) to the first controller (such as the first controller 221 of FIG. 2A) to obtain the first calculation result (such as the first calculation result $Rs_1$ of FIG. 2A), for example, according to the equation (1) listed above.

In step S432, input the second error amount $E_2$ related to the first output current $I_{P1\_EV}$ (such as $E_2=I_{cmd}-I_{P1\_EV}$) to the second controller (such as the second controller 222 of FIG. 2A) to obtain the second calculation result (such as the second calculation result $Rs_2$ of FIG. 2A), for example, according to the equation (1) listed above.

In step S433, the comparator 223 of FIG. 2A, for example, compares the first calculation result and the second calculation result, and sets the smaller one of the first calculation result and the second calculation result as the switching period for both the first converter and the second converter after period transforming, for example, by the period converter 224 of FIG2A, converting the main control output value $Comp_{base}$ to the switching period (Period, according to Period = $Comp_{base} \times SYSCLK/F_{min}$ ). In some implementations, the switching period of the first converter 110 and the second converter 120 can be controlled by the control unit 210, for example.

In step S434, samples the first output voltage $V_{P1\_EV}$ and the second output voltage $V_{P2\_EV}$, and subtracts the first output voltage $V_{P1\_EV}$ from the second output voltage $V_{P2\_EV}$ to obtain the fourth error amount $E_4$ (which $E_4=V_{P2\_EV}-V_{P1\_EV}$).

In step S435, inputs the fourth error amount $E_4$ to the fourth controller (such as the fourth controller 234 of FIG. 2A) to obtain the fourth calculation result (such as the fourth calculation result $Rs_4$ of FIG. 2A), according to the equation (1) listed above, for example.

In step S436, the phase shift angle designation module 235 determines to decrease the phase shift angle of the first converter or the second converter according to the fourth calculation result. For example, when the fourth calculation result $Rs_4$ is negative, the first phase shift angle $Deff_1$ of the first converter 110 is decreased according to the fourth calculation result $Rs_4$, such that the first output current $I_{P1\_EV}$ based on the first phase shift angle $Deff_1$ of the first converter 110, is also decreased. Or, when the fourth calculation result $Rs_4$ is positive, the second phase shift angle $Deff_2$ of the second converter 120 is decreased according to the fourth calculation result $Rs_4$, such that the second output current $I_{P2\_EV}$ based on the second phase shift angle $Deff_2$ of the second converter 120 is also decreased. Accordingly, effects of balancing output voltages/currents of the first converter 110 and the second converter 120 can be achieved.

Referring back to step S420, when the two-phase converter module is not in the series mode (which is in the parallel mode), proceeds to steps S441 to S446. In step S441, inputs the first error amount $E_1$ related to the total output voltage $V_{BAT}$ (such as $E_1=V_{cmd}-V_{BAT}$) to the first controller (such as the first controller 221 of FIG. 2A) to obtain the first calculation result (such as the first calculation result $Rs_1$ of FIG. 2A), according to the equation (1) listed above, for example.

In step S442, inputs the second error amount $E_2$ related to the first output current $I_{P1\_EV}$ and the second output current $I_{P2\_EV}$ (such as $E_2=I_{cmd}-(I_{P1\_EV}+I_{P2\_EV})$) to the second controller (such as the second controller 222 of FIG. 2A) to obtain the second calculation result (such as the second calculation result $Rs_2$ of FIG. 2A), according to the equation (1) listed above, for example.

In step S443, the comparator 223 of FIG. 2A, for example, compares the first calculation result and the second calculation result, sets the smaller one of the first calculation result and the second calculation result as the switching period for both of the first converter and the second converter after period transforming, such as by the period converter 224 of FIG. 2A, converting the main control output value $Comp_{base}$ to the switching period (Period, according to Period = $Comp_{base} \times SYSCLK/F_{min}$ ). In some implementations, the switching period of the first converter 110 and the second converter 120 can be controlled by the control unit 210, for example.

In step S444, samples the first output current $I_{P1\_EV}$ and the second output current $I_{P2\_EV}$, and subtracts the first output current $I_{P1\_EV}$ from the second output current $I_{P2\_EV}$ to obtain the third error amount $E_3$ (which $E_3=I_{P2\_EV}-I_{P1\_EV}$).

In step S445, inputs the third error amount $E_3$ to the third controller (such as the third controller 232 of FIG. 2A) to obtain the third calculation result (such as the third calculation result $Rs_3$ of FIG. 2A), according to the equation (1) listed above, for example.

In step S446, the phase shift angle designation module 235 determines to decrease the phase shift angle of the first converter or the second converter according to the third calculation result. For example, when the third calculation result $Rs_3$ is negative, the first phase shift angle $Deff_1$ of the first converter 110 is decreased according to the third calculation result $Rs_3$, such that the first output current $I_{P1\_EV}$ based on the first phase shift angle $Deff_1$ of the first converter 110 is also decreased. Or, when the third calculation result $Rs_3$ is positive, the second phase shift angle $Deff_2$ of the second converter 120 is decreased according to the third calculation result $Rs_3$, such that the second output current $I_{P2\_EV}$ based on the second phase shift angle $Deff_2$ of the second converter 120 is also decreased. Accordingly, effects of balancing output voltages/currents of the first converter 110 and the second converter 120 can be achieved.

By the techniques of controlling the two-phase converter module provided by the present disclosure, the master control loop of the control system determines the switching period of the two converters, and the balance control loop modulates the phase shift angle of one of the converters, which can implement the balance for output current/voltage of each converter. Since switching periods of each of two converters are same, random changes of noise can be avoided, which noise can be avoided through the frequency conversion sampling method, and the stability of the entire system can be improved.

The switching elements (switch groups or switches) described herein, such as PMOS and NMOS transistors, regarding the use of these transistors, can be replaced with each other, arbitrarily combined or the type of the transistors can be changed to achieve equivalent functions, and it is not limited to the transistor types and combinations described in the embodiments of the present disclosure.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed for execution on one computer or on multiple computers that are located at one site or distributed across multiple sites and interconnected by a communications network.

The processes and logic flows described in this document can be performed by one or more programmable processors executing one or more computer programs to perform the functions described herein. The processes and logic flows can also be performed by, and apparatus can also be implemented as, special purpose logic circuitry, e.g., an FPGA (field programmable gate array) or an ASIC (application specific integrated circuit).

Processors, processing units, engines, and accelerators suitable for the execution of a computer program include, by way of example, both general and special purpose microprocessors, and any one or more processors of any kind of digital computer. Generally, a processor, a processing unit, an engine, or an accelerator will receive instructions and data from a read only memory or a random access memory or both. The essential elements of a computer can include a processor, a processing unit, an engine, or an accelerator for performing instructions and one or more memory devices for storing instructions and data. Generally, a computer can also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data can include all forms of nonvolatile memory, media and memory devices, including by way of example semiconductor memory devices, e.g., EPROM, EEPROM, and flash memory devices; magnetic disks. The processor, the processing unit, the engine, or the accelerator and the memory can be supplemented by, or incorporated in, special purpose logic circuitry, such as other processors, processing units, engines, or accelerators.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1.  A control system (200) for two-phase converter module (100), the control system (200) coupled to the two-phase converter module (100) and comprising:

    a control unit (210), configured to sample a total output voltage of the two-phase converter module (100), a first output voltage and a first output current of a first converter (110) of the two-phase converter module (100), and a second output voltage and a second output current of a second converter (120) of the two-phase converter module (100);
    a master control loop (220), coupled to the control unit (210), the master control loop (220) configured to receive and based on the total output voltage, the first output voltage, the first output current, the second output voltage and the second output current, to obtain a master control output value, and configured to convert the master control output value to a switching period; and
    a balance control loop (230), coupled to the control unit (210), the balance control loop (230) configured to receive and based on the first output voltage, the first output current, the second output voltage and the second output current, wherein, when the two-phase converter module (100) is in a parallel mode, the balance control loop (230) outputs a balance control output value based on the first output current and the second output current, or when the two-phase converter module (100) is in a series mode, the balance control loop (230) outputs the balance control output value based on the first output voltage and the second output voltage, wherein a first phase shift angle and a second phase shift angle are calculated by the balance control loop (230) based on the balance control output value,
    wherein the control unit (210) calculates PWMs (Pulse-width modulations) of switches of, the first converter (110) and the second converter (120) of the two-phase converter module (100) based on the switching period, the first phase shift angle or the second phase shift angle.

2.  The control system (200) according to claim 1, wherein the master control loop (220) further comprises a first controller (221) and a second controller (222), wherein the first controller (221) obtains a first calculation result based on a first error amount related to the total output voltage, and the second controller (222) obtains a second calculation result based on a second error amount related to a total output current, which the control unit (210) selects a smaller one from the first calculation result and the second calculation result as the master control output value.

3.  The control system (200) according to claim 1 or 2, wherein when the two-phase converter module (100) is in the parallel mode, the total output current is a sum of the first output current and the second output current; and when the two-phase converter module (100) is in the series mode, the total output current is the first output current.

4.  The control system according to claim 1, wherein the balance control loop (230) comprises:

    a parallel calculation module (231), comprising a third controller (232), wherein when the two-phase converter module (100) is in the parallel mode, the parallel calculation module (231) obtains a third error amount based on the first output current and the second output current, wherein the third controller is configured to receive the third error amount and outputs a third calculation result as the balance control output value;
    a series calculation module (233), comprising a fourth controller (234), wherein when the two-phase converter module is in the series mode, the series calculation module obtains a fourth error amount based on the first output voltage and the second output voltage, wherein the fourth controller is configured to receive the fourth error amount and outputs a fourth calculation result as the balance control output value.

5. The control system (200) according to claim 4, wherein the balance control loop (230 )further comprises a phase shift angle designation module (235) configured to receive the balance control output value and calculate the first phase shift angle and the second phase shift angle based on the balance control output value and a reference duty cycle.

6. A control method for two-phase converter module (100), comprising:

sampling, by a control unit (210), a total output voltage of the two-phase converter module (100), a first output voltage and a first output current of a first converter (110) of the two-phase converter module (100), and a second output voltage and a second output current of a second converter (120) of the two-phase converter module (100); receiving and basing on, by a master control loop (220), the total output voltage, the first output voltage, the first output current, the second output voltage and the second output current, to obtain a master control output value, and convert, by the master control loop (220), the master control output value to a switching period; receiving and basing on, by a balance control loop (230), the first output voltage, the first output current, the second output voltage and the second output current, wherein, when the two-phase converter module (100) is in a parallel mode, the balance control loop (230) outputs a balance control output value based on the first output current and the second output current, or when the two-phase converter module (100) is in a series mode, the balance control loop (230) outputs the balance control output value based on the first output voltage and the second output voltage, wherein a first phase shift angle and a second phase shift angle are calculated by the balance control loop (230) based on the balance control output value; and calculating, by the control unit (210), PWMs of switches of, the first converter (110) and the second converter (120) of the two-phase converter module (100) based on the switching period, the first phase shift angle or the second phase shift angle.

7. The control method according to claim 6, wherein receiving, by the balance control loop (230), the first output voltage, the first output current, the second output voltage and the second output current further comprises:

obtaining, by a first controller (221) of the master control loop (220), a first calculation result based on a first error amount related to the total output voltage; obtaining, by a second controller (222) of the master control loop (220), a second calculation result based on a second error amount related to a total output current; and selecting, by the control unit (210), a smaller one from the first calculation result and the second calculation result as the master control output value.

8. The control method according to claim 6 or 7, wherein when the two-phase converter module (100) is in the parallel mode, the total output current is a sum of the first output current and the second output current; and when the two-phase converter module (100) is in the series mode, the total output current is the first output current.

9. The control method according to claim 6, wherein the balance control loop (230) outputting the balance control output value based on the first output current and the second output current while the two-phase converter module (100) in the parallel mode further comprise:

obtaining, by a parallel calculation module (231) of the balance control loop (230), a third error amount based on the first output current and the second output current; and receiving, by a third controller (232) of the parallel calculation module (231) of the balance control loop (230), the third error amount to output a third calculation result as the balance control output value based on the third error amount, wherein the balance control loop (230) outputting the balance control output value based on the first output voltage and the second output voltage while the two-phase converter module (100) in the series mode further comprise:

obtaining, by a series calculation module (233) of balance control loop (230), a fourth error amount based on the first output voltage and the second output voltage; and receiving, by a fourth controller (234) of the parallel calculation module (233) of the balance control loop (230), the fourth error amount to output a fourth calculation result as the balance control output value based on the fourth error amount.

10. The control method according to claim 9, wherein the first phase shift angle and the second phase shift angle calculated based on the balance control output value comprises:

receiving, by a phase shift angle designation module (235) of the balance control loop (230), the balance control output value; and
calculating, by the phase shift angle designation module (235), the first phase shift angle and the second phase shift angle based on the balance control output value and a reference duty cycle.

11. A non-transitory computer readable storage medium storing one or more programs, the one or more programs comprising instructions, which when executed by an electronic device, cause the electronic device to perform the control method according to any one of claim 6 to claim 10.

FIG. 1

EP 4 726 992 A1

FIG. 2A

(a) CMPA=0
   CMPB=Period

CMPB

CMPA

250

PH1/2 PWMA

PH1/2 PWMB

(b) CMPA=Period×(1-Deff×2)
   CMPB=Period×Deff×2

CMPB

CMPA

250

PH1/2 PWMC

PH1/2 PWMD

# FIG. 2B

FIG. 3A

EP 4 726 992 A1

FIG. 3B

EP 4 726 992 A1

Start

Sampling $V_{BAT}$, $V_{P1\_EV}$, $I_{P1\_EV}$, and $V_{P2\_EV}$, $I_{P2\_EV}$ — S410

S420

Series mode?

Yes | No

**S431**
Inputting first error amount related to $V_{BAT}$ to first controller to obtain first calculation result

**S432**
Inputting second error amount related to $I_{P1\_EV}$ to second controller to obtain second calculation result

**S433**
Comparing first calculation result and second calculation result, setting the smaller one as switching period for first converter and second converter after period transforming

**S434**
Sampling $V_{P1\_EV}$ and $V_{P2\_EV}$, subtracting $V_{P1\_EV}$ from $V_{P2\_EV}$ to obtain fourth error amount

**S435**
Inputting fourth error amount to fourth controller to obtain fourth calculation result

**S436**
Determining decreasing phase shift angle of first converter or second converter according to fourth calculation result

**S441**
Inputting first error amount related to $V_{BAT}$ to first controller to obtain first calculation result

**S442**
Inputting second error amount related to sum of $I_{P1\_EV}$ and $I_{P2\_EV}$ to second controller to obtain second calculation result

**S443**
Comparing first calculation result and second calculation result, setting the smaller one as switching period for first converter and second converter after period transforming

**S444**
Sampling $I_{P1\_EV}$ and $I_{P2\_EV}$, subtracting $I_{P1\_EV}$ from $I_{P2\_EV}$ to obtain third error amount

**S445**
Inputting third error amount to third controller to obtain third calculation result

**S446**
Determining decreasing phase shift angle of first converter or second converter according to third calculation result

FIG. 4

Europäisches
Patentamt

European
Patent Office

Office européen
des brevets

## EUROPEAN SEARCH REPORT

**Application Number**

EP 25 18 5620

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/072396 A1 (INFINEON TECHNOLOGIES AUSTRIA [AT]) 10 March 2016 (2016-03-10) | 1,6,11 | INV. H02M3/335 H02M1/00 H02M3/158 |
| Y | * paragraphs [0112], [0158], [0151], [0236], [0318], [0334], [0337], [0342], [0373]; figures 4,5,11, 13, 14, 16, 50, 51, 56, 57 * <br> * figures 73, 76A, 76B, 77,78 * <br> ----- | 2-5,7-10 | |
| X | CN 118 316 312 A (SUNGROW POWER SUPPLY CO LTD) 9 July 2024 (2024-07-09) | 1,6,11 | |
| Y | * paragraphs [0004], [0034], [0036], [0065]; figures 2,3,6-9 * <br> ----- | 2-5,7-10 | |
| Y | CN 112 467 994 B (SHENZHEN WINLINE TECH CO LTD) 4 March 2022 (2022-03-04) <br> * paragraph [0043]; figures 1-3 * <br> ----- | 2-5,7-10 | |
| Y | CN 109 038 533 A (UNIV HARBIN ENG) 18 December 2018 (2018-12-18) <br> * abstract; figures 2,3 * <br> ----- | 2-5,7-10 | |
| Y | US 9 899 927 B2 (TDK CORP [JP]) 20 February 2018 (2018-02-20) <br> * column 10, lines 23-31; figures 1,4A-C * <br> ----- | 2-5,7-10 | **TECHNICAL FIELDS SEARCHED (IPC)** <br> H02M |
| Y | CN 115 528 887 A (SHIJIAZHUANG TONHE ELECT TECH CO LTD) 27 December 2022 (2022-12-27) <br> * paragraph [0086]; figures 1,4 * <br> ----- | 2-5,7-10 | |

The present search report has been drawn up for all claims

| Place of search | Date of completion of the search | Examiner |
|---|---|---|
| The Hague | 10 December 2025 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5620

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2025

| Patent document cited in search report | | Publication date | Patent family member(s) | | Publication date |
|---|---|---|---|---|---|
| US 2016072396 | A1 | 10-03-2016 | CN | 105406703 A | 16-03-2016 |
| | | | DE | 102015115041 A1 | 10-03-2016 |
| | | | JP | 2016059264 A | 21-04-2016 |
| | | | US | 2016072396 A1 | 10-03-2016 |
| CN 118316312 | A | 09-07-2024 | NONE | | |
| CN 112467994 | B | 04-03-2022 | NONE | | |
| CN 109038533 | A | 18-12-2018 | NONE | | |
| US 9899927 | B2 | 20-02-2018 | CN | 106329935 A | 11-01-2017 |
| | | | JP | 6575176 B2 | 18-09-2019 |
| | | | JP | 2017017890 A | 19-01-2017 |
| | | | US | 2017005582 A1 | 05-01-2017 |
| CN 115528887 | A | 27-12-2022 | NONE | | |

EPO FORM P0459

For more details about this annex : see Official Journal of the European Patent Office, No. 12/82